# EUROPEAN PATENT SPECIFICATION

(11) **EP 3 954 562 B1**
(45) Date of publication and mention of the grant of the patent: **28.12.2022**
(21) Application number: 20787712.7
(22) Date of filing: 07.04.2020
(51) Int. Cl.: B60K 1/02, B60K 17/02, B60L 15/20

(54) **MULTI-MODE ELECTRIC DRIVE SYSTEM AND VEHICLE**
ELEKTRISCHES MEHRMODUS-ANTRIEBSSYSTEM UND FAHRZEUG
SYSTÈME D'ENTRAÎNEMENT ÉLECTRIQUE MULTIMODAL ET VÉHICULE

(30) Priority: 08.04.2019 CN 201910277709
(43) Date of publication of application: 16.02.2022
(73) Proprietor: Yutong Bus Co., Ltd., Zhengzhou, Henan 450061 (CN)
(72) Inventor: LIU, Xiaowei, Zhengzhou, Henan 450061 (CN); WANG, Yinshu, Zhengzhou, Henan 450061 (CN); WANG, Yan, Zhengzhou, Henan 450061 (CN); WANG, Fusheng, Zhengzhou, Henan 450061 (CN); WANG, Xing, Zhengzhou, Henan 450061 (CN); LI, Jianfeng, Zhengzhou, Henan 450061 (CN); WU, Shengtao, Zhengzhou, Henan 450061 (CN); GUO, Tao, Zhengzhou, Henan 450061 (CN); WANG, Jianwen, Zhengzhou, Henan 450061 (CN)
(74) Representative: Gulde & Partner
(86) International application number: PCT/CN2020/083557
(87) International publication number: WO 2020/207383

(56) References cited:
- EP-A1- 2 472 144
- EP-A2- 1 529 672
- EP-A2- 1 577 141
- US-A1- 2006 175 102

## Description

### TECHNICAL FIELD

The present invention relates to a multi-mode electric drive system and a vehicle.

### BACKGROUND

The existing mainstream solutions of electric drive systems are classified into the following categories: direct drive (a motor is directly connected to an axle), single-motor multi-speed automated mechanical transmission (AMT) drive, dual-motor multi-speed AMT drive, wheel-edge drive, and wheel hub drive. The direct drive, wheel-edge drive, and wheel hub drive modes all have a fixed speed ratio, and cannot achieve a multi-speed ratio transmission between the motor and the wheels. To achieve a high vehicle speed and a large gradeability at the same time, high motor power and motor speed are required, which leads to high costs of an electric drive system. The single-motor multi-speed AMT drive solution achieves both high vehicle speed and large gradeability, but the AMT encounters power interruption during speed shifting, and reliability of a shifting actuator is low. Compared with the single-motor multi-speed AMT, the dual-motor multi-speed AMT resolves the problem of power interruption. However, when a first motor is used for driving at high speed (usually the top gear), a second motor behind a gearbox still needs to rotate with it. In this case, excess energy loss is incurred, and the problem of low reliability of the shifting actuator persists.

At present, to improve operational reliability, many electric drive systems use Ravigneaux planetary mechanism. However, when an existing Ravigneaux planetary mechanism-based electric drive system is in a pure electric drive mode, only one drive mode and only one braking mode are usable. As a result, a system cannot be adjusted to a proper working state according to actual situations and needs, and the operating efficiency of the system cannot be guaranteed, leading to a low system operating efficiency. Multi-mode hybrid drive systems using a Ravigneaux planetary mechanism are e.g. known from US 2006/175102 A1, EP 1 529 672 A2, EP 1 577 141 A2, EP 2 472 144 A1 and KR 20100015064 A.

### SUMMARY

The present disclosure is intended to provide a multi-mode electric drive system to resolve the problem of low system operating efficiency of the existing Ravigneaux planetary mechanism-based electric drive systems in pure electric drive mode. The present invention further provides a vehicle, to resolve a problem of low system operating efficiency of Ravigneaux planetary mechanism-based electric drive systems in existing vehicles in pure electric drive mode.

According to the invention, to achieve the above objective, a multi-mode electric drive system as defined in claim 1 and a vehicle as defined in claim 5 are proposed. Preferred embodiments of the invention are defined in the dependent claims. The technical solution adopted by the present invention is as follows:
A multi-mode electric drive system including: a Ravigneaux planetary mechanism, a first motor, a second motor, and a system output shaft, where the first motor is connected to a second sun gear of the Ravigneaux planetary mechanism, the second motor is connected to a first sun gear of the Ravigneaux planetary mechanism, a ring gear of the Ravigneaux planetary mechanism is connected to a corresponding housing through a first lock-up clutch, the first sun gear of the Ravigneaux planetary mechanism is connected to the corresponding housing through a second lock-up clutch, and a planet carrier of the Ravigneaux planetary mechanism is connected to the system output shaft.

Based on the working principle of the Ravigneaux planetary mechanism, the working states of the first lock-up clutch and the second lock-up clutch are controlled to enable the multi-mode electric drive system to operate in different pure electric drive modes. Therefore, the system can be adjusted to a suitable drive mode based on the actual situation and needs. When the system operates in a suitable drive mode, the operating efficiency of the system can be ensured. That means the system can improve the operating efficiency.

Further, the multi-mode electric drive system further may include a system housing, where the Ravigneaux planetary mechanism, the first motor, the second motor, the first lock-up clutch, and the second lock-up clutch are disposed in the system housing, and the corresponding housing is the system housing. The system housing facilitates the overall arrangement of the multi-mode electric drive system. In addition, the system housing can also protect components of the system and connecting structures thereof to some extent, improving the operating safety and service life of the system.

Further, the first motor and the second motor may be fastened on an inner side wall of the system housing, which can improve the system integration and make the system more compact, and can also improve the installation stability of the first motor and the second motor and ensure the operation reliability of the system.

Further, the multi-mode electric drive system may include four drive modes:
a first drive mode: the first lock-up clutch is in a locked state, the second lock-up clutch is in a disengaged state, the first motor and the second motor are used for system input, and the system output shaft is used for system output;
a second drive mode: the first lock-up clutch is in a locked state, the second lock-up clutch is in a disengaged state, the first motor is used for system input, and the system output shaft is used for system output;
a third drive mode: the first lock-up clutch is in a disengaged state, the second lock-up clutch is in a locked state, the first motor is used for system input, and the system output shaft is used for system output; and
a fourth drive mode: the first lock-up clutch is in a locked state, the second lock-up clutch is in a disengaged state, the second motor is used for system input, and the system output shaft is used for system output.

A vehicle, including a vehicle body and a multi-mode electric drive system, where the multi-mode electric drive system includes a Ravigneaux planetary mechanism, a first motor, a second motor, and a system output shaft, the first motor is connected to a second sun gear of the Ravigneaux planetary mechanism, the second motor is connected to a first sun gear of the Ravigneaux planetary mechanism, a ring gear of the Ravigneaux planetary mechanism is connected to a corresponding housing through a first lock-up clutch, the first sun gear of the Ravigneaux planetary mechanism is connected to the corresponding housing through a second lock-up clutch, and a planet carrier of the Ravigneaux planetary mechanism is connected to the system output shaft.

Based on the working principle of the Ravigneaux planetary mechanism, the working states of the first lock-up clutch and the second lock-up clutch are controlled to enable the multi-mode electric drive system to operate in different pure electric drive modes. Therefore, the vehicle can be adjusted to a suitable drive mode based on the actual situation and needs. When the vehicle operates in a suitable drive mode, the operating efficiency can be ensured, thereby improving the operating efficiency.

Further, the multi-mode electric drive system further may include a system housing, where the Ravigneaux planetary mechanism, the first motor, the second motor, the first lock-up clutch, and the second lock-up clutch are disposed in the system housing, and the corresponding housing is the system housing. The system housing facilitates the overall arrangement of the multi-mode electric drive system. In addition, the system housing can also protect components of the system to some extent, improving the operating safety and service life of the system.

Further, the first motor and the second motor may be fastened on an inner side wall of the system housing, which can improve the system integration and make the system more compact, and can also improve the installation stability of the first motor and the second motor and ensure the operation reliability of the system.

Further, the multi-mode electric drive system may include four drive modes:
a first drive mode: the first lock-up clutch is in a locked state, the second lock-up clutch is in a disengaged state, the first motor and the second motor are used for system input, and the system output shaft is used for system output;
a second drive mode: the first lock-up clutch is in a locked state, the second lock-up clutch is in a disengaged state, the first motor is used for system input, and the system output shaft is used for system output;
a third drive mode: the first lock-up clutch is in a disengaged state, the second lock-up clutch is in a locked state, the first motor is used for system input, and the system output shaft is used for system output; and
a fourth drive mode: the first lock-up clutch is in a locked state, the second lock-up clutch is in a disengaged state, the second motor is used for system input, and the system output shaft is used for system output.

### BRIEF DESCRIPTION OF THE DRAWINGS

FIG. 1 is a structural diagram of a multi-mode electric drive system according to the present invention.
FIG. 2 is a diagram of logic for selecting drive modes of a multi-mode electric drive system according to the present invention.

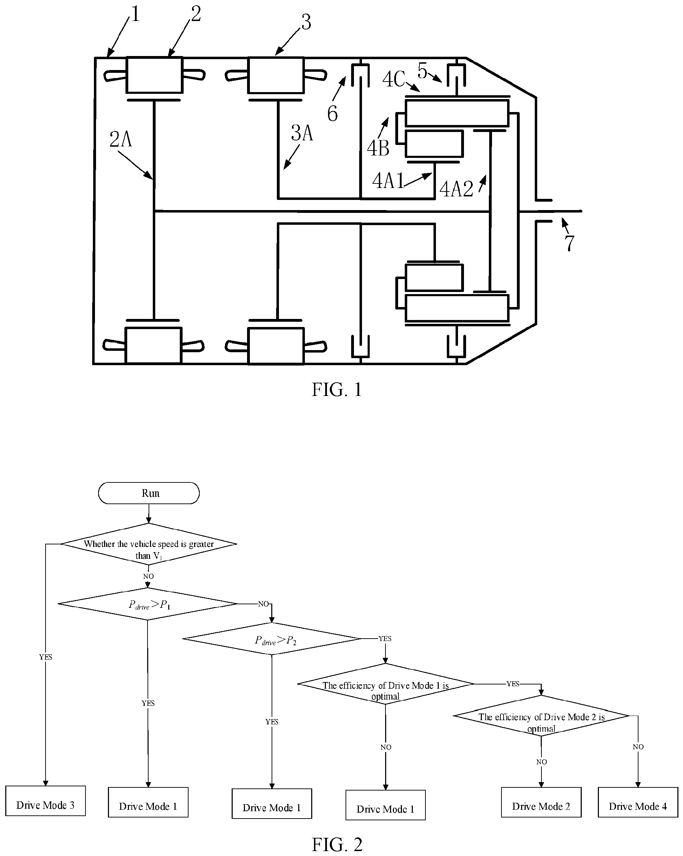

In FIG. 1, 1. gearbox housing, 2. first motor, 2A. first motor rotor, 3. second motor, 3A. second motor rotor, 4A1. first sun gear of Ravigneaux planetary mechanism, 4A2. second sun gear of Ravigneaux planetary mechanism, 4B. planet carrier of Ravigneaux planetary mechanism, 4C. ring gear of Ravigneaux planetary mechanism, 5. first lock-up clutch, 6. second lock-up clutch, and 7. system output shaft.

### DETAILED DESCRIPTION OF THE EMBODIMENTS

### Vehicle embodiment:

This embodiment provides a vehicle, such as a battery electric vehicle, including a vehicle body and a multi-mode electric drive system. Since the vehicle body belongs to a conventional technology and has nothing to do with the invention of this application, the following focuses on the multi-mode electric drive system.

As shown in FIG. 1, the multi-mode electric drive system includes a system housing (that is, a gearbox housing 1, the following description is based on an example in which the gearbox housing 1 is the system housing). A Ravigneaux planetary mechanism, a first motor 2, a second motor 3, a first lock-up clutch 5, a second lock-up clutch 6, and a system output shaft 7 are disposed in the gearbox housing 1. A first motor rotor 2A is connected to a second sun gear 4A2 of the Ravigneaux planetary mechanism, a second motor rotor 3A is connected to a first sun gear 4A1 of the Ravigneaux planetary mechanism, a ring gear 4C of the Ravigneaux planetary mechanism is connected to the gearbox housing 1 through the first lock-up clutch 5, the first sun gear 4A1 of the Ravigneaux planetary mechanism is connected to the gearbox housing 1 through the second lock-up clutch 6, and a planet carrier 4B of the Ravigneaux planetary mechanism is connected to the system output shaft 7. Moreover, to facilitate the fastening of the first motor 2 and the second motor 3, the first motor 2 and the second motor 3 are fastened on an inner side wall of the gearbox housing 1. Certainly, the first motor 2 and the second motor 3 are connected to a traction battery (not shown in the figure). This is a conventional technology and is not described in detail herein. In addition, the system output shaft 7 is configured to output and connect subsequent related drive structures, such as a reducer. This belongs to the prior art and is not described in detail herein.

As can be seen from FIG. 1, the first sun gear 4A1 of the Ravigneaux planetary mechanism is a small sun gear, and the second sun gear 4A2 of the Ravigneaux planetary mechanism is a large sun gear. Certainly, a size relationship between the first sun gear 4A1 of the Ravigneaux planetary mechanism and the second sun gear 4A2 of the Ravigneaux planetary mechanism is not limited thereto.

In the above, the first lock-up clutch 5 and the second lock-up clutch 6 are connected to the gearbox housing 1. The gearbox housing 1 is provided to improve the operation reliability and safety of the system. In a general embodiment, the gearbox housing 1 may alternatively not be disposed. If the gearbox housing 1 is not disposed, the first lock-up clutch 5 and the second lock-up clutch 6 need to be connected to other related housings, such as a body housing.

The multi-mode electric drive system includes following four drive modes. The meanings of the symbols used in the drive modes are as follows:
*T*_{*MG*1} represents a torque of the first motor 2, *T*_{*MG*2} represents a torque of the second motor 3, *k*_{1B} represents a ratio of a radius of the ring gear 4C of the Ravigneaux planetary mechanism to a radius of the second sun gear 4A2 of the Ravigneaux planetary mechanism, *k*_{1A} represents a ratio of the radius of the ring gear 4C of the Ravigneaux planetary mechanism to a radius of the first sun gear 4A1 of the Ravigneaux planetary mechanism, and *Tₒᵤₜ* represents an output torque of the system output shaft 7.

The drive modes are as follows:
drive mode 1: is a dual-motor drive mode, in which the first lock-up clutch 5 is in a locked state, the second lock-up clutch 6 is in a disengaged state, the first motor 2 and the second motor 3 are used for system input, and the system output shaft 7 is used for system output, with a torque satisfying *Tₒᵤₜ* = *k*_{1A}*T*_{*MG*2} +(1+*k*_{1B}) *T*_{*MG*1}.
drive mode 2: is a first motor 2 individually driving with low-speed mode, in which the first lock-up clutch 5 is in a locked state, the second lock-up clutch 6 is in a disengaged state, the first motor 2 is used for system input, and the system output shaft 7 is used for system output, with a torque satisfying *Tₒᵤₜ* = (1+*k*_{1B}) *T*_{*MG*1}*.*
drive mode 3: is a first motor 2 individually driving with high-speed mode, in which the first lock-up clutch 5 is in a disengaged state, the second lock-up clutch 6 is in a locked state, the first motor 2 is used for system input, and the system output shaft 7 is used for system output, with a torque satisfying *Tₒᵤₜ* = (*k*_{1A}+*k*_{1B})/*k*_{1A}*T*_{*MG*1}.
drive mode 4: is a second motor 3 individually drive mode, in which the first lock-up clutch 5 is in a locked state, the second lock-up clutch 6 is in a disengaged state, the second motor 3 is used for system input, and the system output shaft 7 is used for system output, with a torque satisfying *Tₒᵤₜ* =*k*_{1A}*T*_{*MG*2}*.*

FIG. 2 shows a specific logic judgment process for selecting the foregoing four drive modes. Certainly, the present disclosure is not limited to the following specific logic judgment process.

Step 1: Run the logic.

Step 2: Determine whether a vehicle speed is greater than *V*₁ (*V*₁ is a boundary between low speed and high speed of the vehicle), if it is greater than *V*₁, enter drive mode 3; otherwise, proceed to step 3.

Step 3: Determine a required driving power *P_{drive}* of the vehicle, where *P*₁ is a maximum power of the first motor 2, *P*₂ is a maximum power of the second motor 3, and *P*₁ > *P*₂; and if *P_{drive}* > *P*₁, enter drive mode 1, otherwise proceed to step 4.

Step 4: Determine whether *P_{drive}* > *P*₂*,* and if so, enter drive mode 1; otherwise, proceed to step 5.

Step 5: Determine the efficiency of drive mode 1, drive mode 2, and drive mode 4, and select the mode with the best efficiency.

In addition, the multi-mode electric drive system includes four braking modes, corresponding to the four drive modes. In this embodiment, the mode classification of the braking modes is the same as that of the drive modes, the components function in the same way, and the logic for the mode selection operates in the same way, so details are not repeated herein. Certainly, the working mode of each component in each braking mode and the mode selection logic can also be specifically set according to actual needs.

Table 1 lists the states of components in each drive mode and braking mode.

**Table 1**

| Mode | Sub-mode | First motor | Second motor | First lock-up clutch | Second lock-up clutch |
|---|---|---|---|---|---|
| Drive mode | Mode 1 | Electric drive | Electric drive | Locked | Disengaged |
| | Mode 2 | Electric drive | Rotary | Locked | Disengaged |
| | Mode 3 | Electric drive | Stationary | Disengaged | Locked |
| | Mode 4 | Rotary | Electric drive | Locked | Disengaged |
| Braking mode | Mode 1 | Kinetic energy recovery | Kinetic energy recovery | Locked | Disengaged |
| | Mode 2 | Kinetic energy recovery | Rotary | Locked | Disengaged |
| | Mode 3 | Kinetic energy recovery | Stationary | Disengaged | Locked |
| | Mode 4 | Rotary | Kinetic energy recovery | Locked | Disengaged |

Therefore, through the cooperation of the Ravigneaux planetary mechanism, the first lock-up clutch, and the second lock-up clutch, two-gear shifting, from the first motor to the system output shaft, can be implemented, and the shifting process is simple (which can be implemented through speed regulation by the second motor). This resolves the poor reliability of the traditional AMT shift mechanism. Moreover, the shift between two speed ratios can achieve both large gradeability and high vehicle speed. In addition, during the shifting process of the Ravigneaux planetary mechanism, the second motor can be used for speed regulation (cooperating with the first motor through the Ravigneaux planetary mechanism), thereby resolving the power interruption problem of the traditional AMT shift mechanism. The second motor can work together with the first motor during initial acceleration or extreme climbing to improve system dynamics. At high speeds, the second motor can be locked by using the second lock-up clutch, such that the second motor stops rotating and the first motor directly drives the entire, thereby improving the operating efficiency.

The above description relates to specific embodiments of the present invention, but the present invention is not limited thereto. Various changes and modifications may be made to the embodiments within the scope of the present invention as defined by the appended claims.

## Claims

1. A multi-mode electric drive system, comprising a Ravigneaux planetary mechanism, a first motor (2), a second motor (3), and a system output shaft (7), wherein the first motor (2) is connected to a second sun gear (4A2) of the Ravigneaux planetary mechanism, the second motor (3) is connected to a first sun gear (4A1) of the Ravigneaux planetary mechanism, a ring gear (4C) of the Ravigneaux planetary mechanism is connected to a corresponding housing (1) through a first lock-up clutch (5), the first sun gear (4A1) of the Ravigneaux planetary mechanism is connected to the corresponding housing (1) through a second lock-up clutch (6), and a planet carrier (4B) of the Ravigneaux planetary mechanism is connected to the system output shaft (7).

2. The multi-mode electric drive system according to claim 1, **characterized in that** the multi-mode electric drive system further comprises a system housing (1), wherein the Ravigneaux planetary mechanism, the first motor, the second motor, the first lock-up clutch, and the second lock-up clutch are arranged in the system housing, and the corresponding housing is the system housing.

3. The multi-mode electric drive system according to claim 2, **characterized in that** the first motor and the second motor are fastened on an inner side wall of the system housing (1).

4. The multi-mode electric drive system according to claim 1, 2, or 3, **characterized in that** the multi-mode electric drive system comprises four drive modes:
a first drive mode: the first lock-up clutch (5) is in a locked state, the second lock-up clutch (6) is in a disengaged state, the first motor (2) and the second motor (3) are used for system input, and the system output shaft (7) is used for system output;
a second drive mode: the first lock-up clutch (5) is in a locked state, the second lock-up clutch (6) is in a disengaged state, the first motor (2) is used for system input, and the system output shaft (7) is used for system output;
a third drive mode: the first lock-up clutch (5) is in a disengaged state, the second lock-up clutch (6) is in a locked state, the first motor (2) is used for system input, and the system output shaft (7) is used for system output; and
a fourth drive mode: the first lock-up clutch (5) is in a locked state, the second lock-up clutch (6) is in a disengaged state, the second motor (3) is used for system input, and the system output shaft (7) is used for system output.

5. A vehicle, comprising a vehicle body and a multi-mode electric drive system according to any one of claims 1 to 4.

## Patentansprüche

1. Elektrisches Multimode-Antriebssystem, das einen Ravigneaux-Planetenmechanismus, einen ersten Motor (2), einen zweiten Motor (3) und eine Systemausgangswelle (7) umfasst, wobei der erste Motor (2) mit einem zweiten Sonnenrad (4A2) des Ravigneaux-Planetenmechanismus verbunden ist, der zweite Motor (3) mit einem ersten Sonnenrad (4A1) des Ravigneaux-Planetenmechanismus verbunden ist, ein Hohlrad (4c) des Ravigneaux-Planetengetriebes über eine erste Überbrückungskupplung (5) mit einem entsprechenden Gehäuse (1) verbunden ist, das erste Sonnenrad (4A1) des Ravigneaux-Planetengetriebes über eine zweite Überbrückungskupplung (6) mit dem entsprechenden Gehäuse (1) verbunden ist, und ein Planetenträger (4B) des Ravigneaux-Planetengetriebes mit der Systemausgangswelle (7) verbunden ist.

2. Elektrisches Multimode-Antriebssystem nach Anspruch 1, **dadurch gekennzeichnet, dass** das elektrische Multimode-Antriebssystem ferner ein Systemgehäuse (1) umfasst, wobei der Ravigneaux-Planetenmechanismus, der erste Motor, der zweite Motor, die erste Überbrückungskupplung und die zweite Überbrückungskupplung in dem Systemgehäuse angeordnet sind und das entsprechende Gehäuse das Systemgehäuse ist.

3. Multimode-Elektroantriebssystem nach Anspruch 2, **dadurch gekennzeichnet, dass** der erste Motor und der zweite Motor an einer inneren Seitenwand des Systemgehäuses (1) befestigt sind.

4. Multimode-Elektroantriebssystem nach Anspruch 1, 2 oder 3, **dadurch gekennzeichnet, dass** das Multimode-Elektroantriebssystem vier Antriebsmodi umfasst:
einen ersten Antriebsmodus: die erste Überbrückungskupplung (5) befindet sich in einem verriegelten Zustand, die zweite Überbrückungskupplung (6) befindet sich in einem ausgerückten Zustand, der erste Motor (2) und der zweite Motor (3) werden für den Systemeingang verwendet, und die Systemausgangswelle (7) wird für den Systemausgang verwendet;
einen zweiten Antriebsmodus: die erste Überbrückungskupplung (5) befindet sich in einem verriegelten Zustand, die zweite Überbrückung (6) befindet sich in einem entriegelten Zustand, der erste Motor (2) wird für den Systemantrieb verwendet, und die Systemausgangswelle (7) wird für den Systemausgang verwendet;
einen dritten Antriebsmodus: die erste Überbrückungskupplung (5) befindet sich in einem ausgerückten Zustand, die zweite Überbrückungskupplung (6) befindet sich in einem verriegelten Zustand, der erste Motor (2) wird für den Systemeingang verwendet, und die Systemausgangswelle (7) wird für den Systemausgang verwendet; und
einen vierten Antriebsmodus: die erste Überbrückungskupplung (5) befindet sich in einem verriegelten Zustand, die zweite Überbrückungskupplung (6) befindet sich in einem ausgerückten Zustand, der zweite Motor (3) wird für den Systemeingang verwendet, und die Systemausgangswelle (7) wird für den Systemausgang verwendet.

5. Fahrzeug, das eine Fahrzeugkarosserie und ein elektrisches Multimode-Antriebssystem nach einem der Ansprüche 1 bis 4 umfasst.

## Revendications

1. Système d'entra nement électrique multi-mode, comprenant un mécanisme planétaire de Ravigneaux, un premier moteur (2), un second moteur (3) et un arbre de sortie de système (7), dans lequel le premier moteur (2) est connecté à une seconde roue solaire (4A2) du mécanisme planétaire de Ravigneaux, le second moteur (3) est connecté à une première roue solaire (4A1) du mécanisme planétaire de Ravigneaux, une couronne (4c) du mécanisme planétaire de Ravigneaux est reliée à un carter correspondant (1) par l'intermédiaire d'un premier embrayage de verrouillage (5), le premier planétaire (4A1) du mécanisme planétaire de Ravigneaux est relié au carter correspondant (1) par l'intermédiaire d'un second embrayage de verrouillage (6), et un porte-satellites (4B) du mécanisme planétaire de Ravigneaux est relié à l'arbre de sortie du système (7).

2. Système d'entraînement électrique multi-mode selon la revendication 1, **caractérisé en ce que** le système d'entraînement électrique multi-mode comprend en outre un boîtier de système (1), dans lequel le mécanisme planétaire de Ravigneaux, le premier moteur, le second moteur, le premier embrayage de verrouillage et le second embrayage de verrouillage sont disposés dans le boîtier de système, et le boîtier correspondant est le boîtier de système.

3. Système d'entraînement électrique multi-mode selon la revendication 2, **caractérisé en ce que** le premier moteur et le second moteur sont fixés sur une paroi latérale intérieure du boîtier du système (1).

4. Système d'entraînement électrique multi-mode selon la revendication 1, 2 ou 3, caract érisé en ce que le système d'entraînement électrique multi-mode comprend quatre modes d'entraînement :
un premier mode d'entraînement : le premier embrayage de verrouillage (5) est dans un état verrouillé, le second embrayage de verrouillage (6) est dans un état désengagé, le premier moteur (2) et le second moteur (3) sont utilisés pour l'entrée du système, et l'arbre de sortie du système (7) est utilisé pour la sortie du système ;
un second mode d'entraînement : le premier embrayage de verrouillage (5) est dans un état verrouillé, le second embrayage de verrouillage (6) est dans un état désengagé, le premier moteur (2) est utilisé pour l'entrée du système, et l'arbre de sortie du système (7) est utilisé pour la sortie du système ;
un troisième mode d'entraînement : le premier embrayage de verrouillage (5) est dans un état désengagé, le second embrayage de verrouillage (6) est dans un état verrouillé, le premier moteur (2) est utilisé pour l'entrée du système, et l'arbre de sortie du système (7) est utilisé pour la sortie du système ; et
un quatrième mode d'entraînement : le premier embrayage de verrouillage (5) est dans un état verrouillé, le second embrayage de verrouillage (6) est dans un état désengagé, le second moteur (3) est utilisé pour l'entrée du système, et l'arbre de sortie du système (7) est utilisé pour la sortie du système.

5. Véhicule, comprenant une caisse de véhicule et un système d'entraînement électrique multimode selon l'une quelconque des revendications 1 à 4.
